# EUROPÄISCHE PATENTANMELDUNG

(11) **EP 2 196 662 A2**
(43) Veröffentlichungstag der Anmeldung: **16.06.2010**
(21) Anmeldenummer: 09177034.7
(22) Anmeldetag: 25.11.2009
(51) Int. Cl.: F02M 25/07

(54) **Auflademodul, Aufladesystem und Brennkraftsystem**

(30) Priorität: 09.12.2008 DE 102008060610
(71) Anmelder: Behr GmbH & Co. KG, 70469 Stuttgart (DE)
(72) Erfinder: Diem, Johannes, 71287, Weissach (DE); Haßdenteufel, Klaus, 70839, Gerlingen (DE); Hentschel, Gunther, 73066, Uhingen (DE)

(57) **Zusammenfassung**

Die Erfindung betrifft ein Auflademodul (1, 1') für ein Aufladesystem (10) einer Brennkraftmaschine (101), aufweisend ein Saugrohr (20) für ein Ladefluid, insbesondere ein Gas wie Abgas und/oder Ladeluft od. dgl. Gasgemische, und ein Behältnis (30) für Kühlfluid. Erfindungsgemäß ist vorgesehen, dass das Behältnis (30) im Saugrohr (20) integriert ist und Druckkopplungsmittel eines Innendruckes des Behältnisses (30) an einen Innendruck des Saugrohres (20) vorgesehen sind.

## Beschreibung

Die Erfindung betrifft ein Auflademodul für ein Aufladesystem einer Brennkraftmaschine, aufweisend ein Saugrohr für ein Ladefluid und ein Behältnis für Kühlfluid. Die Erfindung betrifft auch ein Aufladesystem mit dem Auflademodul und einem Ladefluidkreislauf und einem Kühlfluidkreislauf. Weiter betrifft die Erfindung ein Brennkraftsystem mit einem Aufladesystem und einer Brennkraftmaschine.

Für Brennkraftmaschinen wie z.B. einem Otto-Motor oder einem Dieselmotor od.dgl. ist häufig ein Aufladesystem vorgesehen, mit dem ein Ladefluid - beispielsweise ein Abgas, eine Ladeluft oder ein Abgas-Ladeluftgemisch od.dgl. Gase oder Gasgemische - der Brennkraftmaschine in komprimierter Form im Betrieb zugeführt wird. Dies führt nicht nur zu einer Leistungssteigerung, sondern auch zur Senkung des Kraftstoffverbrauchs und zur Senkung einer Schadstoffemission der Brennkraftmaschine. Um solche und andere Betriebsparameter der Brennkraftmaschine zu optimieren, ist es regelmäßig erforderlich, das durch die Verdichtung im Aufladesystem erhitzte Ladefluid unter möglichst geringem Druckverlust zu kühlen.

Dazu hat es sich bei fortschrittlichen Aufladesystemen durchgesetzt, einen Wärmetauscher, wie einen Abgas- und/oder Ladeluftkühler od.dgl. oder andere Komponenten eines Aufladesystems, wie z.B. ein Behältnis für Kühlfluid, bei einem Auflademodul des Aufladesystems der eingangs genannten Art im Saugrohr zu integrieren.

Als problematisch hat sich dabei erwiesen, dass bei höheren Lasten des Brennkraftsystems höhere Ladedrücke und dadurch höhere Ladefluidtemperaturen und höhere Siedegefahren im Kühlfluid auftreten können. Üblicherweise wird einer Siedegefahr im Kühlfluid mit einem bestimmten Kühlfluiddruck Einhalt geboten. Zum Teil ist es - wie beispielsweise in DE 40 37 644 A1 beschrieben - auch erwünscht, ein Kühlsystem als Verdampfungs-Kühlsystem zu betreiben. Bei solchen und anderen Kühlsystemen ist ein Ausgleichsbehälter für Kühlfluid vorgesehen, welcher regelmäßig als separates Bauteil im Fahrzeug verbaut ist. In DE 40 37 644 A1 ist ein Ausgleichsbehältnis mittels einer Verbindungsleitung an eine dampfgefüllte Zone eines Kühlsystems angeschlossen, welches zur Motorkühlung ausgelegt ist. Dem Ausgleichsbehältnis ist zumindest ein Hilfsmittel zur Reduzierung des Innendrucks im Kühlsystem zugeordnet, welches mit einer zur Sauganlage der Verbrennungskraftmaschine führenden Leitung kommuniziert. Ein Ausgleichsbehältnis eines solchen Kühlsystems benötigt einen vergleichsweise hohen separaten Bauraum und das Kühlsystem ist im Übrigen unabhängig von einem Ladefluidsystem.

Ein Ausgleichsbehältnis eines Motorkühlsystems kann - wie in DE 10 2004 045 661 A1 beschrieben - in einem Saugrohr eines Auflademoduls integriert werden. Ein solches Auflademodul der eingangs genannten Art ist noch verbesserungswürdig.

An dieser Stelle setzt die Erfindung an, deren Aufgabe es ist, ein Auflademodul der eingangs genannten Art anzugeben, welches hinsichtlich Bauraumbedarf und Druckauslegung verbessert ist. Insbesondere soll ein Bauraumbedarf und eine Druckauslegung hinsichtlich einer Ladefluidführung und einer Kühlfluidführung, insbesondere einer Kühlfluidführung zur Kühlung des Ladefluids, verbessert werden.

Weitere Aufgabe ist es, ein entsprechend verbessertes Aufladesystem und ein entsprechend verbessertes Brennkraftsystem anzugeben.

Betreffend das Auflademodul wird die Aufgabe durch die Erfindung mittels einem Auflademodul der eingangs genannten Art gelöst, bei dem erfindungsgemäß das Behältnis im Saugrohr integriert ist und Druckkopplungsmittel eines Druckes im Behältnis an einen Druck im Saugrohr vorgesehen sind.

Die Erfindung geht von der Überlegung aus, dass bei einem im Saugrohr integrierten Behältnis für Kühlfluid eine Druckkopplung zwischen einem Behältnisdruck und einem Saugrohrdruck besonders einfach und sicher realisierbar sind. Die Erfindung hat erkannt, dass sich Druckkopplungsmittel zur Kopplung eines Druckes im Behältnis an einen Druck im Saugrohr besonders einfach bei einem im Saugrohr integrierten Behältnis realisieren lassen.

Im Rahmen einer besonders bevorzugten Weiterbildung wird das Konzept der Erfindung vorteilhaft mit einem Behältnis für Kühlfluid realisiert, welches Teil eines Kühlkreislaufes zur Kühlung des Ladefluids ist. Insbesondere betrifft dies ein Ausgleichsbehältnis für Kühlfluid.

Gemäß dem Konzept der Erfindung lässt sich eine bauliche Integration des Behältnisses im Bauraum des Saugrohres zusammen mit der Funktion eines Druckausgleichs zwischen Behältnis und Saugrohr vorteilhaft realisieren. Dies erlaubt insbesondere eine bedarfsgerechte Druckanhebung für ein Kühlfluid bei ansteigendem Saugrohrdruck und vermeidet in verbesserter Weise die Siedeanfälligkeit des Kühlfluids im Kühlkreislauf, insbesondere in einem Kühlkreislauf zur Kühlung des Ladefluids.

Das Konzept der Erfindung führt entsprechend auf ein Aufladesystem mit einem erfindungsgemäßen Auflademodul sowie einem Ladefluidkreislauf und einem Kühlfluidkreislauf. In besonders vorteilhafter Weise ist der Kühlfluidkreislauf Teil einer indirekten Ladefluidkühlung.

Es hat sich darüber hinaus gezeigt, dass das Konzept der Erfindung besonders vorteilhaft auf einen Kühlfluidkreislauf zur Kühlung einer Ladeluft und/oder eines Abgases anwendbar ist, welcher Kühlkreislauf entsprechend an eine Ladeluft und/oder Abgasführung gekoppelt ist.

Insbesondere lässt sich das Konzept der Erfindung mit Vorteilen realisieren für ein Aufladesystem, aufweisend einen Hochtemperaturkreislauf und Niedertemperaturkreislauf, wobei der Kühlfluidkreislauf als ein Niedertemperaturkreislauf, insbesondere als ein separater Niedertemperaturkreislauf, ausgelegt ist.

Das Konzept der Erfindung führt auch auf ein Brennkraftsystem mit einem erfindungsgemäßen Aufladesystem und einer Brennkraftmaschine.

In besonders vorteilhafter Weise ist die Brennkraftmaschine als ein Motor, wie beispielsweise als ein Otto-Motor oder ein Dieselmotor, gebildet. Das Brennkraftsystem weist darüber hinaus vorteilhaft ein Abgassystem auf.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiter Vorteile zu realisieren.

In besonders bevorzugter Weise ist das Druckkopplungsmittel zum Druckausgleich zwischen Saugrohr und Behältnis ausgelegt. Dem Konzept der Erfindung folgend kann dies zur Druckanhebung im Kühlfluidkreislauf und damit zur Vermeidung von Siedeproblemen im Kühlfluidkreislauf genutzt werden.

Vorteilhaft ist ein Druckkopplungsmittel in Form einer beweglichen fluiddichten Trennwand gebildet. Ein Druckkopplungsmittel lässt sich so besonders einfach realisieren. Die Trennwand kann mit oder ohne Druckübersetzung ausgebildet sein. Soweit eine Druckübersetzung beim Druckkopplungsmittel vorgesehen ist, kann diese vorteilhaft flächenproportional, betreffend eine kühlfluidseitige und ladefluidseitige Fläche des Druckkopplungsmittels, wirken.

Im Rahmen einer ersten Variante ist die Trennwand vorteilhaft Teil einer Wandung des Behältnisses und damit besonders einfach realisierbar.

Im Rahmen einer zusätzlichen oder alternativen weiteren Variante kann die Trennwand in einer Druckleitung zwischen Behältnis und Saugrohr angeordnet sein. Diese Variante erlaubt eine flexiblere Anpassung von Behältnis und Saugrohr auf die baulichen Gegebenheiten.

Vorteilhaft kann die Trennwand in Form einer flexiblen Membran gebildet sein, insbesondere in Form einer flexiblen Membran als Teil einer Wandung des Behältnisses. Dadurch lässt sich eine besonders genaue Druckanpassung zwischen Kühlfluidkreislauf und Ladefluidkreislauf im Bereich des Druckkopplungsmittels erreichen.

Es ist auch möglich, die Trennwand in Form eines Kolbens zu bilden. Vorteilhaft eignet sich ein Kolben dazu, mit einer Druckübersetzung versehen zu sein, insbesondere mit einer oben erläuterten flächenproportionalen Druckübersetzung.

Es hat sich darüber hinaus als vorteilhaft erwiesen, dass das Druckkopplungsmittel mit einer Begrenzungsfunktion versehen ist. Eine Begrenzungsfunktion hat den Vorteil, dass diese konstruktive Gegebenheiten und/oder Materialbeanspruchungsgrenzen des Druckkopplungsmittels und/oder weiterer Komponente berücksichtigen kann. Insbesondere kann einer Trennwand oder einem Kolben oder einem sonstigen Druckkopplungsmittel ein Anschlag zur Begrenzung einer Bewegungsamplitude des Druckkopplungsmittels zugeordnet sein.

Im Rahmen einer besonders bevorzugten Weiterbildung hat sich ein Auflademodul als vorteilhaft erwiesen, welches darüber hinaus einen im Auflademodul integrierten Wärmetauscher aufweist, welcher zum Wärmetausch zwischen dem Ladefluid und dem Kühlfluid ausgelegt ist. Es hat sich insbesondere im Rahmen dieser Weiterbildung und auch für separat realisierte, nicht integrierte Wärmetauscher herausgestellt, dass ein im Saugrohr integriertes Behältnis zusammen mit einem Druckkopplungsmittel vorteilhaft dazu genutzt werden kann, eine Beanspruchung des Wärmetauschers herabzusetzen. Das Druckkopplungsmittel beseitigt oder reduziert wesentlich eine Druckdifferenz zwischen Kühlfluid- und Ladefluidseite des Wärmetauschers, so dass die Festigkeitsanforderungen an den Wärmetauscher sinken können. Dies kann vorteilhaft zur Reduzierung eines Materialeinsatzes am Wärmetauscher genutzt werden.

Vorteilhaft ist ein Brennkraftsystem mit einem Aufladesystem und einer Brennkraftmaschine, insbesondere einem Motor, wie einem Otto-Motor oder einem Dieselmotor od.dgl. und einem Abgassystem.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Die Zeichnung zeigt in:
- Fig. 1: eine schematische Darstellung eines Brennkraftsystems mit einem Aufladesystem, welches im Rahmen einer besonders bevor- zugten Ausführungsform mit einem Auflademodul gemäß dem Konzept der Erfindung ausgeführt werden kann;
- Fig. 2: eine schematische Querschnittsdarstellung in einem Querschnitt quer zur Ladefluidströmung für ein Auflademodul gemäß einer bevorzugten Ausführungsform nach dem Konzept der Erfindung;
- Fig. 3: eine schematische Querschnittsdarstellung einer weiteren Ausführungsform eines Auflademoduls längs einer Ladefluidströmung, welche das anhand von Fig. 2 erläuterte Konzept der Erfindung realisiert;
- Fig. 4: eine Draufsicht auf ein Auflademodul der Fig. 3, wobei das Auflademodul mit integriertem Wärmetauscher ausgeführt ist.

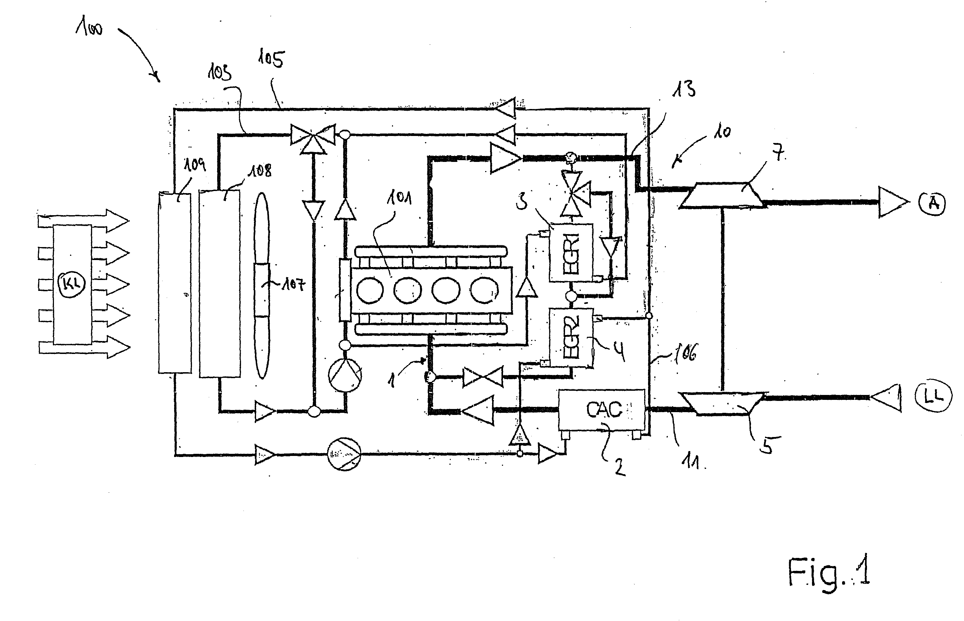

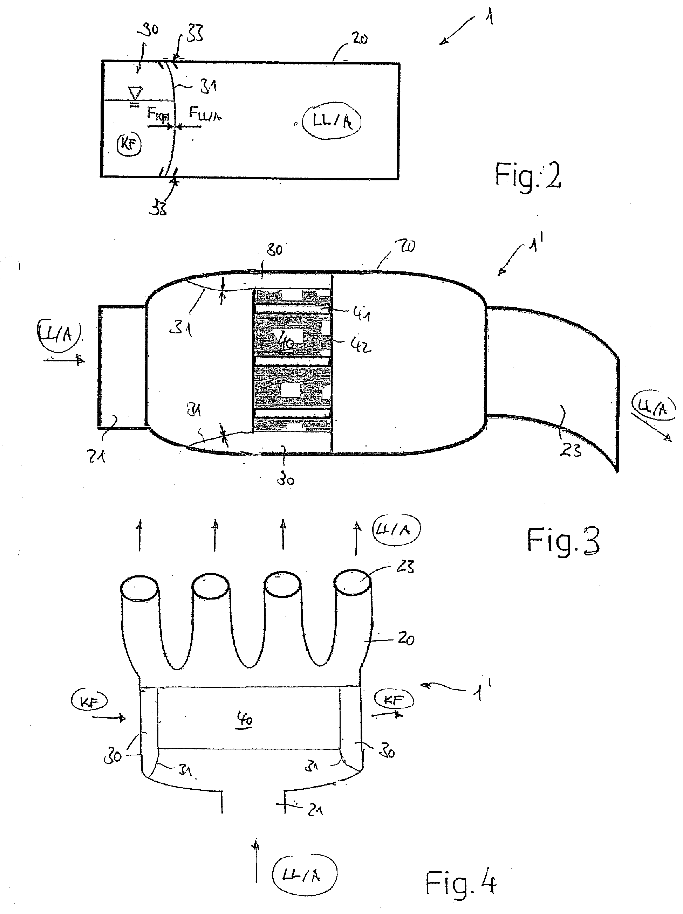

Fig. 1 zeigt ein Brennkraftsystem 100 mit einem Aufladesystem 10, bei dem ein Auflademodul 1 gemäß dem Konzept der Erfindung integriert ist. Das Brennkraftsystem und das Aufladesystem ist vorliegend schematisch dargestellt und wird anhand der Fig. 1 näher erläutert. Unterschiedliche Ausführungsformen eines Auflademoduls, wie sie in dem hier dargestellten beispielhaften Brennkraftsystem 100 und Aufladesystem 10 eingesetzt werden können, sind anhand der Fig. 2 bis Fig. 4 näher beschrieben. Gleiche oder ähnliche Merkmale oder Merkmale gleicher oder ähnlicher Funktion sind vorliegend der Einfachheit halber mit gleichen Bezugszeichen versehen.

Das Brennkraftsystem 100 weist neben dem Aufladesystem 10 eine Brennkraftmaschine 101 sowie Kühlkreisläufe 103, 105 auf. Die Kühlkreisläufe 103, 105 führen jeweils ein Kühlfluid zur Kühlung eines Ladefluids, das in einer Ladefluidführung 11 der Brennkraftmaschine 101 zugeführt wird und als Abgas in einer Abgasführung 13 aus der Brennkraftmaschine 101 abgeführt wird. Außerdem ist ein separater Kühlkreislauf 106 zur Kühlung von Ladeluft in der Ladefluidführung 11 vorgesehen.

Vorliegend wird Ladefluid in Form einer Ladeluft LL durch einen ersten Wärmetauscher 2 gekühlt. Ladefluid in Form eines rückgeführten Abgases A wird mittels einem weiteren Wärmetauscher 3 in Form eines Hochtemperatur-Wärmetauschers und einem nachgeschalteten weiteren Wärmetauscher 4 in Form eines Niedertemperatur-Wärmetauschers gekühlt und schließlich zusammen mit der Ladeluft als Ladefluid über das Auflademodul 1 der Verbrennungskraftmaschine 101 in gekühlter Form zugeführt. Ein zur Komprimierung der Ladeluft vorgesehener Kompressor 5 wird über eine durch das Abgas angetriebene Turbine 7 angetrieben.

Entsprechend ist der Kühlkreislauf 103 als Hochtemperatur-Kühlkreislauf ausgelegt. Der weitere Kühlkreislauf 105 ist als Niedertemperatur-Kreislauf ausgelegt. Der Hochtemperatur-Kreislauf ist zur Rückkühlung des Hochtemperatur-Wärmetauschers ausgelegt und vorliegend mit der Motorkühlung gekoppelt. Der Niedertemperatur-Kühlkreislauf 105 ist vorliegend zur Rückkühlung des Wärmetauschers 2 in Form des Ladeluftkühlers und des weiteren Wärmetauschers 4 in Form des Niedertemperatur-Kühlers ausgelegt. Das Kühlmittel im Hochtemperatur-Kreislauf bzw. Niedertemperatur-Kreislauf 105 wird mittels Kühlluft KL, welche über einen Ventilator 107 angesaugt wird, über entsprechende Radiatoren 108, 109 rückgekühlt.

Zum steuerbaren Betrieb des Brennkraftsystems 100 sind vorliegend symbolisch eingezeichnete, nicht näher erläuterte Pumpen und Ventile vorgesehen.

Auch wenn die Wärmetauscher 2, 3, 4 vorliegend schematisch separat vom Auflademodul 1 dargestellt sind, so lassen Sie sich dennoch nach Bedarf - wie beispielsweise in Fig. 3, Fig. 4 dargestellt - im Auflademodul 1 integrieren.

Fig. 2 verdeutlicht anhand eines schematischen Querschnitts durch ein Auflademodul 1 das grundsätzliche Konzept der Erfindung. Das Auflademodul 1 ist beispielsweise in einem Aufladesystem 10 - wie es anhand von Fig. 1 erläutert wurde - in der Peripherie einer Brennkraftmaschine 101 eingesetzt. Das Auflademodul 1 ist vorliegend mit einem Querschnitt durch das Saugrohr 20 für das Ladefluid LL/A in Form von Ladeluft und Abgas dargestellt. Das Auflademodul 1 weist darüber hinaus ein Behältnis 30 für ein Kühlfluid KF eines Kühlkreislaufes, vorliegend des Niedertemperatur-Kühlkreislaufes 105, auf. Im vorliegenden Fall handelt es sich insbesondere um Kühlfluid des separaten Kühlkreislaufes 106 zur Kühlung der Ladeluft im Wärmetauscher 2 in Form des Ladeluftkühlers. In abgewandelten Ausführungsformen kann das Behältnis 30 auch für andere Kühlfluide eines Kühlkreislaufs zur Kühlung eines Ladefluids genutzt werden.

Das Behältnis 30 ist vorliegend als Ausgleichsbehältnis für das Kühlfluid ausgelegt, wobei eine Trennwand 31 als Wandung des Behältnisses 30 in Form einer beweglichen fluiddichten und flexiblen Membran gebildet ist. Dadurch wird zum einen das Kühlfluid vom Ladefluid stofflich getrennt und zum anderen ein Druckausgleich zwischen dem Kühlfluid und der Ladeluft - entsprechend ein Druckausgleich zwischen dem Kühlkreislauf 106 und der Ladefluidführung 11, wie sie anhand der Fig. 1 erläutert wurden - erreicht. Das Kräftegleichgewicht zwischen den im Kühlfluid herrschenden Kräften F_{KF} und den im Ladefluid herrschenden Kräften F_{LL/A} ist schematisch dargestellt.

Vorliegend ist eine Bewegungsamplitude der Trennwand 31 durch fixe Membranabstützungen 33 beschränkt. Dadurch kann die Membran der Wandung des Behältnisses 30 nur bis zu ihrer maximalen Beanspruchungsgrenze belastet werden, so dass die Integrität der Membran selbst bei ungewöhnlich hohen Druckdifferenzen zwischen Kühlfluid und Ladefluid gewährleistet ist.

Fig. 3 zeigt in einer längs der Ladefluidströmung gelegten Querschnittsansicht eine abgewandelte Ausführungsform eines Auflademoduls 1', welches in Fig. 4 in einer Draufsicht gezeigt ist. Das Auflademodul 1' weist wiederum ein Saugrohr 20 auf, dem ein Stutzen 21 zur Zuführung des Ladefluids LL/A sowie mehrere Zylinderstutzen 23 zur Zuführung des komprimierten und gekühlten Ladefluids LL/A zu Zylindern der Brennkraftmaschine 101 nachgeschaltet ist. Im Saugrohr ist ein Behältnis 30, wie es anhand von Fig. 2 erläutert wurde, beidseitig eines Wärmetauschers 40 angeordnet. Der Wärmetauscher 40 weist vorliegend einen Block mit Strömungskanälen 41 und Wärmeleitblechen 42 zur voneinander getrennten und wärmetauschenden Führung des Ladefluids und des Kühlfluids auf. Das Kühlfluid wird den Strömungskanälen 41 über eine in Fig. 4 symbolisch dargestellte Kühlfluidzuführung zugeführt. Die durch das Saugrohr 20 vorgenommene Ladefluidzuführung durchströmt die Wärmetauschbleche, welche den Wärmetausch zwischen dem Ladefluid und dem Kühlfluid effizient erhöhen.

Selbst bei vergleichsweise hochfrequenten dynamischen Druckschwankungen im Ladefluid ergibt sich über die Trennwand 31 - eine flexible, bewegliche, fluiddichte Membran als Wandung des Behältnisses 30 - ein relativ schneller Druckausgleich zwischen dem Ladefluid und dem im Behältnis vorhandenen Kühlfluid, so dass ein Sieden des Kühlfluids im Kühlkreislauf 106 sicher vermieden ist. Dies hat den Vorteil, dass der Druck im Kühlfluidkreislauf 106 nicht an der Maximaldruckgrenze gehalten werden muss, sondern vielmehr bedarfs- und lastabhängig zweckmäßig angepasst ist. Damit werden die Komponenten des Kühlkreislaufs 106, insbesondere der Wärmetauscher 40 - welcher beispielsweise als Ladeluft-Wärmetauscher 2 der Fig. 1 eingesetzt werden kann - nicht stärker beansprucht als unbedingt notwendig. Dies hat den Vorteil, dass die Festigkeitsanforderungen beim Wärmetauscher 40 nicht hinsichtlich einer statischen Maximalbelastung ausgelegt werden müssen, sondern bereits ausreichend sind, wenn sie entsprechenden Maximaldrücken als dynamische Spitzenlast widerstehen. Dadurch kann beispielsweise ein Materialeinsatz und ein konstruktiver Aufwand zur Realisierung des Wärmetauschers 40 mit Kostenvorteil verringert werden.

Zusammenfassend betrifft die Erfindung ein Auflademodul 1, 1' für ein Aufladesystem 10 einer Brennkraftmaschine 101, aufweisend ein Saugrohr 20 für ein Ladefluid, insbesondere ein Gas wie Abgas und/oder Ladeluft od. dgl. Gasgemische, und ein Behältnis 30 für Kühlfluid, wobei das Behältnis 30 im Saugrohr 20 integriert ist und Druckkopplungsmittel eines Innendruckes des Behältnisses 30 an einen Innendruck des Saugrohres 20 vorgesehen sind.

### Bezugszeichenliste

- 1: Auflademodul
- 1': Auflademodul
- 2: Wärmetauscher
- 3: Wärmetauscher
- 4: Wärmetauscher
- 5: Kompressor
- 7: Turbine
- 10: Aufladesystem
- 11: Ladefluidführung
- 13: Abgasführung

- 20: Saugrohr
- 21: Stutzen
- 23: Zylinderstutzen
- 30: Behältnis
- 31: Trennwand
- 40: Wärmetauscher
- 41: Strömungskanäle
- 42: Wärmeleitbleche

- 100: Brennkraftsystem
- 101: Brennkraftmaschine
- 103: Kühlkreislauf (Hochtemperatur-Kühlkreislauf)
- 105: Kühlkreislauf (Niedertemperatur-Kühlkreislauf)
- 106: Kühlkreislauf (separater Kühlkreislauf)
- 107: Ventilator
- 108: Radiator
- 109: Radiator

## Patentansprüche

1. Auflademodul (1, 1') für ein Aufladesystem (10) einer Brennkraftmaschine (101), aufweisend ein Saugrohr (20) für ein Ladefluid, insbesondere ein Gas wie Abgas und/oder Ladeluft od. dgl. Gasgemische, und ein Behältnis (30) für Kühlfluid **dadurch gekennzeichnet, dass** das Behältnis (30) im Saugrohr (20) integriert ist und Druckkopplungsmittel eines Innendruckes des Behältnisses (30) an einen Innendruck des Saugrohres (20) vorgesehen sind.

2. Auflademodul (1, 1') nach Anspruch 1 **dadurch gekennzeichnet, dass** das Behältnis (30) für Kühlfluid Teil eines Kühlkreislaufes (106) zur Kühlung des Ladefluids ist, insbesondere ein Ausgleichsbehältnis für Kühlfluid ist.

3. Auflademodul (1, 1') nach Anspruch 1 oder 2 **dadurch gekennzeichnet, dass** das Druckkopplungsmittel zum Druckausgleich zwischen Saugrohr (20) und Behältnis (30) ausgelegt ist.

4. Auflademodul (1, 1') nach einem der Ansprüche 1 bis 3 **dadurch gekennzeichnet, dass** das Druckkopplungsmittel in Form einer beweglichen fluiddichten Trennwand (31) gebildet ist.

5. Auflademodul (1, 1') nach einem der Ansprüche 1 bis 4 **dadurch gekennzeichnet, dass** das Druckkopplungsmittel eine Druckübersetzung aufweist, insbesondere eine betreffend eine kühlfluidseitige und ladefluidseitige Fläche des Druckkopplungsmittels flächenproportional wirkende Druckübersetzung.

6. Auflademodul (1, 1') nach einem der Ansprüche 1 bis 5 **dadurch gekennzeichnet, dass** die Trennwand (31) Teil einer Wandung des Behältnisses (30) ist.

7. Auflademodul (1, 1') nach einem der Ansprüche 1 bis 6 **dadurch gekennzeichnet, dass** die Trennwand in einer Druckleitung zwischen Behältnis (30) und Saugrohr (20) angeordnet ist.

8. Auflademodul (1, 1') nach einem der Ansprüche 1 bis 7 **dadurch gekennzeichnet, dass** die Trennwand (31) in Form einer flexiblen Membran gebildet ist.

9. Auflademodul (1, 1') nach einem der Ansprüche 1 bis 8 **dadurch gekennzeichnet, dass** die Trennwand in Form eines Kolbens, insbesondere eines Kolbens mit Druckübersetzung, gebildet ist.

10. Auflademodul (1, 1') nach einem der Ansprüche 1 bis 9 **dadurch gekennzeichnet, dass** das Druckkopplungsmittel mit einer Begrenzungsfunktion versehen ist, insbesondere eine Trennwand (31) oder ein Kolben einem Anschlag zur Begrenzung einer Bewegungsamplitude der Trennwand (31) oder des Kolbens zugeordnet ist.

11. Auflademodul (1, 1') nach einem der Ansprüche 1 bis 10 **dadurch gekennzeichnet, dass** im Auflademodul (1) ein Wärmetauscher (2, 3, 4, 40), zum Wärmetausch zwischen dem Ladefluid und dem Kühlfluid integriert ist.

12. Auflademodul (1. 1') nach einem der Ansprüche 1 bis 11 **dadurch gekennzeichnet, dass** der Wärmetauscher (2, 3, 4, 40) einen Block zur voneinander getrennten und wärmetauschenden Führung des Ladefluids und des Kühlfluids aufweist, insbesondere eine Kühlfluidzuführung und/oder eine Ladefluidzuführung.

13. Aufladesystem (10), aufweisend ein Auflademodul (1) nach einem der Ansprüche 1 bis 12 sowie einen Ladefluidkreislauf und einen Kühlfluidkreislauf, insbesondere ein Kühlfluidkreislauf (103, 105, 106) als Teil einer indirekten Ladefluidkühlung.

14. Aufladesystem (10) nach Anspruch 13 **dadurch gekennzeichnet, dass** der Kühlfluidkreislauf (103, 105, 106) zur Kühlung einer Ladeluft- und/oder eines Abgases an eine Ladeluft- und/oder Abgasführung (11, 13) gekoppelt ist.

15. Aufladesystem (10) nach Anspruch 13 oder 14 **dadurch gekennzeichnet, dass** ein Hochtemperatur-Kreislauf (103) und ein Niedertemperatur-Kreislauf (105) vorgesehen ist und der Kühlfluidkreislauf als ein Niedertemparatur-Kreislauf (105), insbesondere als ein separater Niedertemparatur-Kreislauf (106), ausgelegt ist.
